# EUROPEAN PATENT APPLICATION

(11) **EP 1 755 009 A2**
(43) Date of publication of application: **21.02.2007**
(21) Application number: 06254265.9
(22) Date of filing: 15.08.2006
(51) Int. Cl.: G05B 19/408

(54) **Numerical controller**

(30) Priority: 15.08.2005 JP 2005235555
(71) Applicant: FANUC LTD, Minamitsuru-gun, Yamanashi 401-0597 (JP)
(72) Inventor: Endou, Katsuhiro, Yamanashi, 403-0016 (JP); Genma, Eiji, Yamanashi, 401-0310 (JP)
(74) Representative: Billington, Lawrence Emlyn

(57) **Abstract**

A numerical controller that can easily set parameter values related to servo control used within itself. Machine constants are set in the numerical controller. The numerical controller calculates the parameter values related to the servo control used in the numerical controller, from the set machine constants, and stores and sets them in a memory means within the numerical controller. The parameter values calculated are also fed to an output device such as a display device for an operator to check them. When a machine to be controlled by the numerical controller is determined, the machine constants can be easily obtained from the specifications or the like of the machine and set in the numerical controller. Since the numerical controller itself calculates and sets the parameter values related to the servo control, the setting can be easily carried out without full knowledge of the internal elements, structure and operation principle of the machine, the processing performed by the numeric control unit, etc.

## Description

### BACKGROUND OF THE INVENTION

### 1. Field of the Invention

The present invention relates to a numerical controller for controlling a machine tool or the like, and particularly setting of values of various parameters which are used in mathematical operations performed within the numerical controller and which vary depending on various constants of a machine controlled by the numerical controller.

### 2. Description of Related Art

In the numerical controller, in order to ensure consistency with commands processed in the numerical controller and outputted by the numerical controller, various values need to be set in accordance with a type of a machine to be controlled by the numerical controller and machine constants of components of the machine. For example, the numerical controller drive-controls a control axis using a motor via a ball screw or a gear mechanism, where the motion amount of the control axis relative to the amount of rotation of the motor varies depending on the pitch of the ball screw and the gear ratio used in the machine. Further, the weight of feedback data fed back to the numerical controller varies depending on the resolution of a detector for detecting the position and speed in motion of the control axis, etc. When the detector is a rotary detector for detecting the position in rotation and speed of the motor or control axis, such as a rotary encoder, the amount of pulses per rotation, and therefore the weight of a feedback pulse (angle of rotation, motion amount) varies depending on the resolution of the rotary detector. Thus, various values used in mathematical operations within the numerical controller need to be set in accordance with the machine specifications, or in other words, the constants of components of the machine (above-mentioned pitch of the ball screw, gear ratio and resolution of the detector).

Conventionally, a worker used to hand-calculate a unit of detection which is the unit for feedback data from the detector (motion amount of the control axis per feedback pulse) from machine constants such as the constants of components of the machine such as the pitch of the ball screw, the gear ratio and the resolution of the detector, then hand-calculate various values used in mathematical operations within the numerical controller, using the unit of detection calculated, and set the obtained values in the numerical controller as parameters.

There used to be no way but the way in which a worker or the like calculates various values which are determined depending on machine constants and used in mathematical operations within the numerical controller and sets the obtained values individually in the numerical controller as mentioned above, and therefore, there used to be no way of setting such values easily. There was found no published document disclosing a setting method or means other then the above-mentioned, either.

In the method in which the worker calculates various values (parameter values) used in mathematical operations within the numerical controller from the machine constants of the machine connected to and controlled by the numerical controller, calculation errors and setting errors can happen. The various parameter values can be set according to the setting procedures described in a numerical-control-unit use manual or the like. However, the various values (parameter values) used in mathematical operations within the numerical controller are complexly related to the machine constants, such as the pitch of the ball screw, the gear ratio, the resolution of the detector, the unit of detection, namely the unit for feedback data from the detector (motion amount of the control axis per feedback pulse), etc., as mentioned above. Thus, without understanding the internal components, structure and operation principle of the machine, the processing performed by the numerical controller, etc., it is difficult to understand the meanings of the parameter values and set them without error.

### SUMMARY OF THE INVENTION

The present invention arranges that the numerical controller itself can set the various parameter values used in mathematical operations within the numerical controller, instead of the worker calculating them. Among the various values which need to be set as parameters for use in mathematical operations within the numerical controller, values related to servo control are important. Thus, the present invention arranges, in particular, that the parameter values related to servo control can be set easily.

A numerical controller of the present invention controls a servomotor for driving a movable element of a machine using parameters. The numerical controller comprises: setting/storage means for setting and storing machine constants pertaining to components of the machine; calculation means for calculating values of the parameters to be used in the control of the servomotor based on the stored machine constants; and storage means for storing the values of the parameters calculated by the calculation means.

The numerical controller may further comprise output means for outputting the values of the parameters calculated by the calculation means.

The parameters may include a conversion coefficient for converting the number of feedback pulses from a position detector into a motion amount of the movable element in terms of a unit of position detection to be used by the numerical controller.

If a calculated value of the conversion coefficient deviates from an allowable range, the calculation means may obtain a new value of the unit of position detection such that a calculated value of the conversion coefficient is within the allowable range.

The calculation means may recalculate values of the parameters using the new value of the unit of position detection. The storage means may store the recalculated parameters.

Upon setting of the machine constants, the numerical controller automatically obtains and sets values of the parameters related to the servomotor control and used in the numerical controller. Thus, setting errors can be avoided. Further, this enables even a worker or the like who does not have full knowledge of the elements, structure and operation principle of the machine connected to the numerical controller, the processing performed by the numerical controller or the like to easily set the parameters.

### BRIEF DESCRIPTION OF THE DRAWINGS

FIG. 1 is a block diagram showing relevant parts of an embodiment of numerical controller according to the present invention,
FIG. 2 is a flow chart showing an algorism for setting parameter values related to servomotor control in a first mode in the above embodiment, and
FIG. 3 is a flow chart showing an algorism for setting parameter values related to servomotor control in a second mode in the above embodiment.

### DETAILED DESCRIPTION

Referring to the attached drawings, an embodiment of the present invention will be described below.

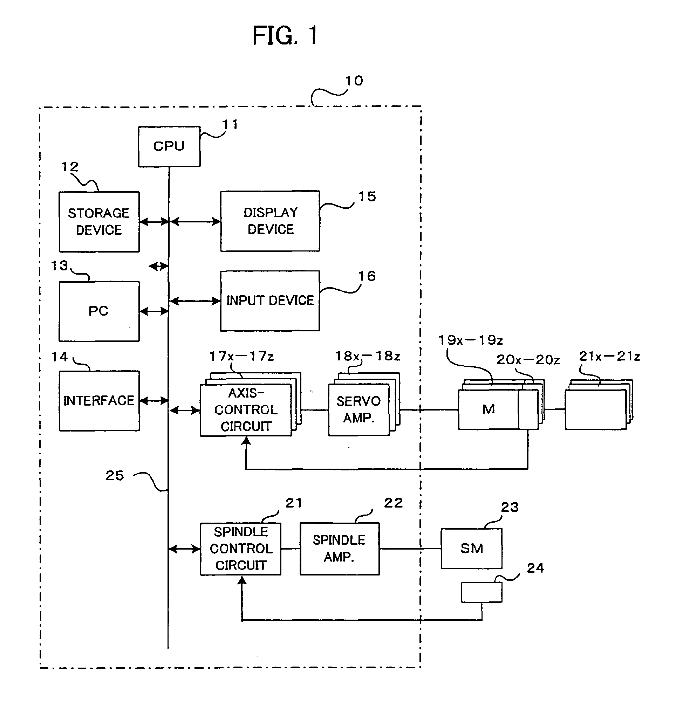

FIG. 1 is a block diagram showing relevant parts of an embodiment of numerical controller according to the present invention.

A CPU 11 is a processor for controlling a numerical controller 10 as a whole. The CPU 11 reads system programs stored in a storage device 12 via a bus 25 and controls the whole numerical controller 10 according to the system programs. The storage device 12 includes ROM, RAM, nonvolatile memory which is CMOS memory and backed up by a battery to maintain the memory state even when a power supply to the numerical controller 10 is disconnected, etc. In the nonvolatile memory of the storage device 12, machining programs read via an interface 14, machining programs entered by means of a display device 15 and an input device 16, etc. are stored. Machine constants which are set in relation to the present invention, and various parameter values including parameter values related to servomotor control which are calculated also from the machine constants and used in the numerical controller are also stored. Further, processing programs for obtaining the various parameter values used within the numerical controller from the machine constants are stored in the ROM of the memory means.

According to sequence programs stored within the numerical controller 10, a PC (programmable controller) 13 sends out a signal and thereby controls an auxiliary device of a to-be-controlled machine tool (actuator such as a tool-change robot hand, for example). The PC 13 also receives signals from various switches and the like on a control panel attached to the body of the machine tool to be controlled by the numerical controller, performs necessary signal processing on them and forwards them to the CPU 11.

The interface 14 enables connection between the numerical controller 10 and an external device.

The display device 15 using CRT, liquid crystal or the like and the input device 16 including a keyboard, a pointing device or the like are connected to the bus 25 so that various data entered by an operator using the display device 15 and the input device 16 is stored.

Axis control circuits 17x, 17y, 17z each associated with an axis receive a motion command amount for each axis from the CPU 11 and provide a command for each axis to servo amplifiers 18x, 18y, 18z. Receiving the command, the servo amplifiers 18x, 18y, 18z drive servomotors 19x, 19y, 19z for driving movable elements 21x, 21y, 21z on respective axes of the machine. The servomotors 19x, 19y, 19z have position·speed detectors 20x, 20y, 20z, respectively, and perform position·speed feedback control by feeding a position·speed feedback signal from the position·speed detectors 20x to 20z back to the axis control circuits 17x to 17z. Although the present embodiment relates to an example in which the position-speed detectors 20x to 20z are attached to the servomotors 19x to 19z, the position-speed detectors may be attached to those driven by the servomotors. Further, although the position-speed detector used in this embodiment is a rotary detector for detecting the position in rotation and speed of a rotation axis, there are cases in which a linear detector for detecting the position and speed in linear motion is used.

A spindle control circuit 21 receives a main axis rotation command and sends a spindle speed signal to a spindle amplifier 22. Receiving the spindle speed signal, the spindle amplifier 22 causes a main axis motor 23 to rotate at the rotation speed specified by the command. A position coder 24 performs speed control by feeding feedback pulses back to the spindle control circuit 21 in synchronization with rotation of the main axis motor 23.

The structure of the numerical controller 10 described above is the same as that of the conventional numerical controller. The distinctive feature of the numerical controller according to the present invention lies in that the numerical controller can obtain and set the parameter values used in mathematical operations within the numerical controller 10 on the basis of set machine constants, while such parameter values conventionally used to be set manually, and particularly in that the numerical controller has a function of setting the parameter values related to servomotor control, itself.

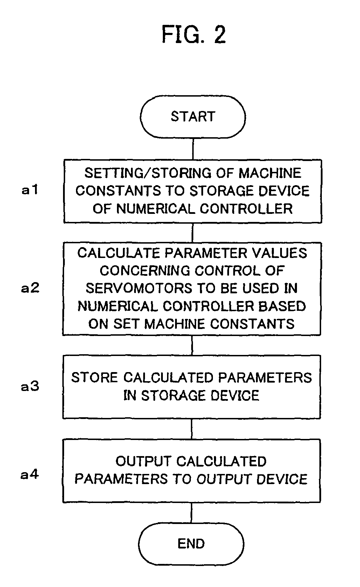

FIG. 2 is a flow chart showing an algorism for setting the parameter values related to servomotor control in a first mode in the present invention.

First, machine constants are set and stored in the storage device 12 in the numerical controller 10 using the display device 15 and the input device 16 (Step a1). After the setting of the machine constants finishes, the CPU 11 calculates values of the parameters regarding the control of the servomotors to be used in the numerical controller, on the basis of the machine constants set in the storage device 12 (Step a2).

The parameter values thus obtained are set and stored in the storage device 12 (Step a3), and also outputted to the output device (display device 15) and displayed for the operator to check them (Step a4), with which the parameter setting finishes.

As a parameter related to servomotor control, there is, for example a conversion coefficient for converting weight of feedback pulses from the detector for detecting position and speed for controlling of the servomotor into weight in position detection by the numerical controller. This is an important parameter, since the consistency between the command from the numerical controller and position of a movable element on a control axis driven by the servomotor is established by this conversion coefficient.

In the present embodiment, the following set machine constants are used for the conversion coefficient:
- gear ratio between the motor and the drive mechanism (ball screw): G [dimensionless]
- pitch of the ball screw: L [units of length]
- minimum resolution of position detection (unit of detection) in position feedback to be used in the numerical controller: I [units of length]
- resolution of the detector: D [dimensionless].

By multiplying the gear ratio G and the pitch L of the ball screw, the motion amount of the control axis per unit amount of motion of the motor (per rotation) (G×L) is obtained.

Further, the minimum resolution I of position feedback represents a unit of position detection to be used in the numerical controller with respect to one feedback pulse. The resolution D of the detector represents the number of pulses per unit motion amount of a movable object detectable by the detector. When the detector is a rotary detector, it represents the number of pulses produced by the detector per rotation, and when the detector is a linear detector, it represents the number of pulses per unit amount of motion. Thus, by dividing the motion amount of the control axis per unit motion amount of the motor (per rotation) (G×L) by (I×D), the motion amount of the control axis per one feedback pulse in terms of the number of units of detection [(G/L)/(I×D)] is obtained.

Thus, by multiplying the number of feedback pulses from the position·speed detector 20x-20z by the unit of detection I and the conversion coefficient [(G×L)/(I×D)], the feedback pulses are converted into the motion amount of the control axis in terms of the unit of detection used in the numerical controller.

This conversion coefficient is stored in the storage device 12, where since the number of digits of a value allowed to be stored in the memory means is limited, the conversion coefficient [(G×L)/(I×D)] is reduced to its lowest terms and the resultant numerator and denominator are stored as the numerator and denominator of the conversion coefficient, respectively (Step a3), and also displayed on the output device (display device 15) so that the operator can check the conversion coefficient (Step a4).

After converting the weight of the feedback pulse for controlling the servomotor into the weight used in position detection by the numerical controller by using the above conversion coefficient, it is necessary to automatically calculate the amount of pulses per rotation of the motor from the machine constants and set the obtained amount in a pulse counter for counting the amount of pulses per rotation of the motor, as a parameter value (maximum value in counting which corresponds to the number of pulses per rotation of the motor), where this value to be set in the pulse counter for counting the amount of pulses per rotation of the motor is also automatically calculated by the numerical controller, on the basis of the set machine constants (Step a2).

Using the following set machine constants
- pitch of the ball screw: L, and
- minimum resolution in position feedback used within the numerical controller (unit of detection): I,
operation (L/I) is performed, and the numerator and denominator obtained by reduction are stored in the storage device 12 as a parameter for use in a pulse counter for counting the number of pulses per pitch of the ball screw (Step a3), and also fed to the output device (display device 15).

The parameter calculated by (L/I) is the maximum value for the number of control pulses counted by the counter per pitch of the ball screw in terms of the unit of detection. This value is used to determine the proper position of the machine, in reference-point return control in which the numerical controller places the machine in the proper position.

Apart from the above, other parameters related to the servomotor control are calculated from the machine constants (Step a2), stored in the storage device 12 (Step a3), and also fed to the output device (display device 15) so that the operator can check the parameter values calculated (Step a4).

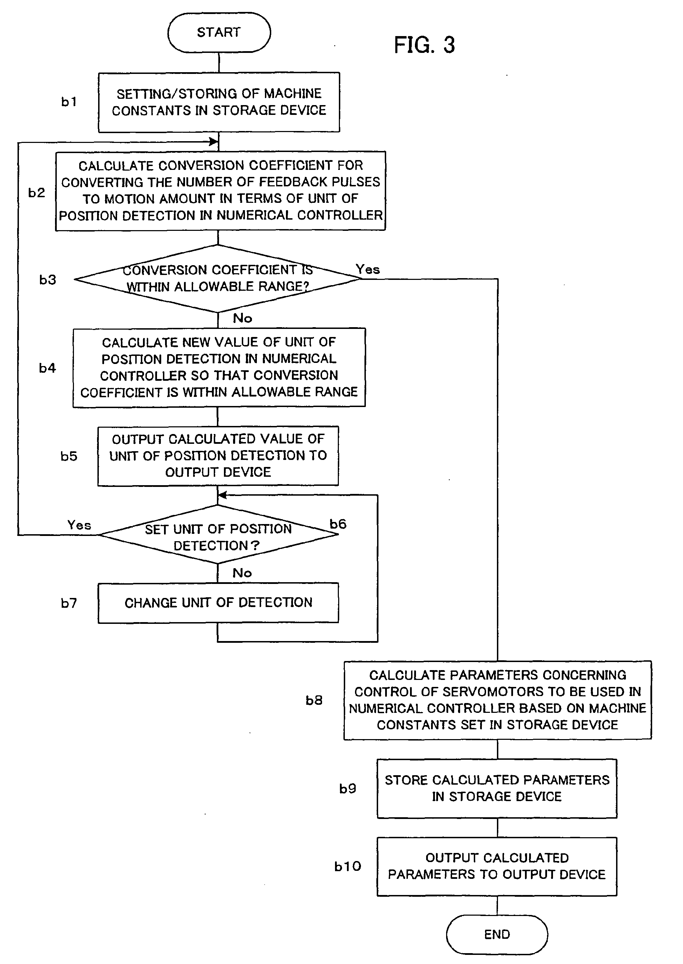

FIG. 3 is a flow chart showing an algorism for operation in a second mode in the present invention.

In the second mode, considering that many of the parameters related to the servomotor control are determined on the basis of the above-mentioned conversion coefficient, if the conversion coefficient exceeds the limit on the number of digits allowed to be stored in the memory means, the unit of detection I is changed and the conversion coefficient is recalculated so that the conversion coefficient will not exceed the limit, and the values of the other parameters are determined on the basis of the finally-determined conversion coefficient and the set machine constants.

First, machine constants are set and stored in the storage device 12 in the numerical controller (Step b1). Next, calculation of the above-mentioned conversion coefficient, including reduction, is performed using the gear ratio G between the motor and the drive mechanism (ball screw), the pitch L of the ball screw, the unit of detection I and the resolution D of the detector which are among the set machine constants (Step b2). It is determined whether or not the conversion coefficient obtained has a value within an allowable range to be stored in the parameter setting section in the storage device 12 (Step b2), and if it has a value within the allowable range, Step b8 is taken.

If the obtained value is not within the allowable range, an unit of detection I which gives a conversion coefficient within the allowable range is obtained (Step b4). The unit of detection I obtained is outputted to the output device (display device 15) and displayed, and whether or not the setting of the unit of detection should be performed is asked (Steps b5, b6). The operator changes the displayed unit of detection I if necessary (Step b7) and sets a definitive unit of detection I. (Step b6). If a setting OK command is entered, Step b2 is taken again, that is, the conversion coefficient is obtained on the basis of the set unit of detection I and other set machine constants, and then Step b3 is taken. In this way, when a conversion coefficient not exceeding the limit is obtained, the parameter values related to the servomotor control used in the numerical controller are calculated on the basis of this conversion coefficient and the other set machine constants (Step b8), and the conversion coefficient and other parameter values thus obtained are stored in the storage device 12 (Step b9). The parameter values calculated are also fed to the output device (display device 15) and displayed for the operator to check them.

Although the output device in the present embodiment is a display device, another output device such as a printer can be used.

## Claims

1. A numerical controller for controlling a servomotor for driving a movable element of a machine using parameters, comprising:
setting/storage means for setting and storing machine constants pertaining to components of the machine;
calculation means for calculating values of the parameters to be used in the control of the servomotor based on the stored machine constants; and
storage means for storing the values of the parameters calculated by said calculation means.

2. A numerical controller according to claim 1, further comprising output means for outputting the values of the parameters calculated by said calculation means.

3. A numerical controller according to claim 1, wherein the parameters include a conversion coefficient for converting the number of feedback pulses from a position detector into a motion amount of the movable element in terms of a unit of position detection to be used by the numerical controller.

4. A numerical controller according to claim 3, wherein if a calculated value of the conversion coefficient deviates from an allowable range, said calculation means obtains a new value of the unit of position detection such that a calculated value of the conversion coefficient is within the allowable range.

5. A numerical controller according to claim 4, wherein said calculation means recalculates values of the parameters using the new value of the unit of position detection.

6. A numerical controller according to claim 5, wherein said storage means stores the recalculated parameters.
